# EUROPEAN PATENT APPLICATION

(11) **EP 4 269 091 A1**
(43) Date of publication of application: **01.11.2023**
(21) Application number: 21915285.7
(22) Date of filing: 27.12.2021
(51) Int. Cl.: B32B 17/10, B32B 27/00, B32B 27/30

(54) **LAYERED RESIN FILM, AND LAMINATE**

(30) Priority: 28.12.2020 JP 2020219291
(71) Applicant: AGC INC., Chiyoda-ku, Tokyo 1008405 (JP)
(72) Inventor: KAWAKAMI Remi, Tokyo 100-8405 (JP)
(74) Representative: Müller-Boré & Partner Patentanwälte PartG mbB
(86) International application number: PCT/JP2021/048608
(87) International publication number: WO 2022/145426

(57) **Abstract**

To provide a technique which suppresses warpage and peeling due to a temperature change even with a structure asymmetric about a transparent resin layer.

A layered resin film comprising a stress relaxation layer formed of a cured product of a photocurable resin or a thermosetting resin, and
an adhesive layer formed of a thermoplastic resin,
wherein the adhesive layer is laminated on one side or on both sides of the stress relaxation layer and forms an outermost layer, and
the stress relaxation layer has a glass transition temperature of 0°C or less.

## Description

### TECHNICAL FIELD

The present disclosure relates to a layered resin film and a laminate.

### BACKGROUND ART

Patent Document 1 discloses a laminate comprising a resin plate, a glass plate, a spacer provided between the resin plate and the glass plate, and an interlayer formed in a space formed by the spacer. The interlayer is formed by injecting a resin from an inlet of the spacer and curing the resin at room temperature. The inlet of the spacer is closed after injection of the resin.

Patent Document 2 discloses a laminate comprising a transparent resin layer, a transparent adhesive layer formed on both sides of the transparent resin layer, and a glass layer bonded to the transparent resin layer by each transparent adhesive layer. The glass layer is provided on both sides of the transparent resin layer. Since the laminate has a structure symmetric about the transparent resin layer, its warpage due to a temperature change can be reduced.

### PRIOR ART DOCUMENTS

### PATENT DOCUMENTS

Patent Document 1: Japanese Patent No. 6653831
Patent Document 2: WO2016/152735

### DISCLOSURE OF INVENTION

### TECHNICAL PROBLEM

The laminate in Patent Document 1 is prepared by forming a space between the resin plate and the glass plate by the spacer, and curing the resin injected into the space at room temperature. Since there is no temperature change in the laminate production process, no stress will occur resulting from a difference in the coefficient of linear expansion between the resin plate and the glass plate. Thus, substantially no warpage nor peeling occur in the laminate production process. However, warpage or peeling may occur by a temperature change which occurs after the production of the lam inate.

Since the laminate in Patent Document 2 has a structure symmetric about the transparent resin layer, warpage and peeling due to a temperature change can be suppressed. However, since the glass layer is provided on both sides of the transparent resin layer, if the glass layer is broken e.g. by an impact, shards of glass may fly to both sides of the transparent resin layer.

According to an embodiment of the present disclosure, a technique which suppresses warpage and peeling due to a temperature change even with a structure asymmetric about the transparent resin layer, is provided.

### SOLUTION TO PROBLEM

According to an embodiment of the present disclosure, provided is a layered resin film comprising a stress relaxation layer formed of a cured product of a photocurable resin or a thermosetting resin, and an adhesive layer formed of a thermoplastic resin. The adhesive layer is laminated on one side or on both sides of the stress relaxation layer and forms an outermost layer. The stress relaxation layer has a glass transition temperature of 0°C or less.

### ADVANTAGEOUS EFFECTS OF INVENTION

According to an embodiment of the present disclosure, by employing a stress relaxation layer having a glass transition temperature of 0°C or less, warpage and peeling can be suppressed by shear deformation of the stress relaxation layer.

### BRIEF DESCRIPTION OF DRAWINGS

Fig. 1 is a diagram illustrating a laminate according to an embodiment.
Fig. 2 is a diagram illustrating a laminate according to a modified example.
Fig. 3 is a diagram illustrating an example of a method of measuring the warpage of a laminate.
Fig. 4 is a diagram illustrating an example of a method of preparing a test specimen used for measurement of the adhesion F1.
Fig. 5 is a diagram illustrating a method of measuring the adhesion F1.
Fig. 6 is a diagram illustrating an example of a method of preparing a test specimen used for measurement of the adhesion F2.
Fig. 7 is a diagram illustrating an example of a method of measuring the adhesion F2.

### DESCRIPTION OF EMBODIMENTS

In the following, embodiments of the present disclosure will be described with reference to drawings. In the drawings, the same or corresponding structures are represented by the same reference symbols, and their explanation may sometimes be omitted. In this specification, " to " used to show the range of the numerical values is used to include the numerical values before and after it as the lower limit value and the upper limit value.

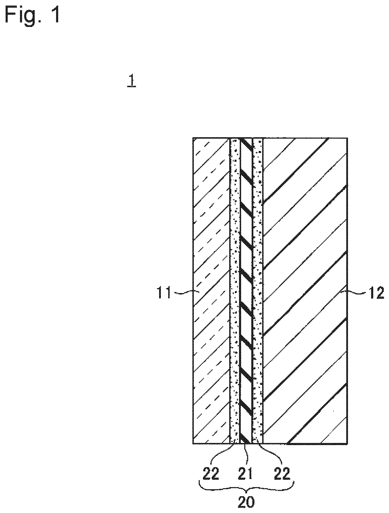

First, a laminate 1 according to the present embodiment will be described with reference to Fig. 1. The laminate 1 has a first plate-like body 11, a second plate-like body 12, and a layered resin film 20 to bond the first plate-like body 11 and the second plate-like body 12. On one side of the layered resin film 20, the first plate-like body 11 is laminated, and on the other side of the layered resin film 20, the second plate-like body 12 is laminated.

A method for producing the laminate 1 is as follows. First, the first plate-like body 11 and the second plate-like body 12 are overlaid with the layered resin film 20 being sandwiched to prepare a laminated body. The laminated body is placed in a vacuum bag, and in a state where the vacuum bag is evacuated of air, the vacuum bag is baked in the air. The baking temperature is not particularly limited and may, for example, be about 85°C. Then, the laminated body is taken out from the vacuum bag and heated while pressurized in an autoclave. The heating temperature is not particularly limited and may, for example, be about 100°C. As a result, the first plate-like body 11 and the second plate-like body 12 are integrated via the layered resin film 20 to obtain the laminate 1.

The laminate 1 has a structure asymmetric about the layered resin film 20. For example, the first plate-like body 11 and the second plate-like body 12 are formed of different materials. For example, the first plate-like body 11 is a glass plate, and the second plate-like body 12 is a resin plate. A ceramic plate may be used instead of the glass plate. Different properties may be imparted to both sides of the layered resin film 20. Hereinafter the glass plate as the first plate-like body 11 will sometimes be referred to as a glass plate 11, and the resin plate as the second plate-like body 12 will sometimes be referred to as a resin plate 12.

The glass plate 11 is excellent in chemical resistance as compared with the resin plate 12. On the other hand, the resin plate 12 is excellent in penetration resistance as compared with the glass plate 11. The laminate 1 having the glass plate 11 and the resin plate 12 is used for e.g. a window of a processing equipment. The processing equipment may, for example, be a machining center, which conducts processing such as cutting, grinding and polishing.

The laminate 1 is attached, for example, to a window frame of a processing equipment so that the glass plate 11 faces the interior side and the resin plate 12 faces the exterior side. The glass plate 11 protects the resin plate 12 from e.g. an organic solvent used at the time of processing and prevents cloudiness of the resin plate 12. The resin plate 12 prevents shards of the glass plate 11 broken by an impact from flying to the outside of the processing equipment.

Application of the laminate 1 is not limited to a processing equipment. For example, the laminate 1 may be used for a vehicle such as a train or an automobile. For example, the laminate 1 is attached to a window frame of a vehicle so that the glass plate 11 faces the vehicle interior side and the resin plate 12 faces the vehicle exterior side. By such a constitution, it is possible to prevent the laminate 1 from being broken when hit by a flying stone, and drive of the vehicle will not be inhibited. In addition, the laminate 1 may also be applicable to a building window, a platform door, a partition of a room, a top plate or a protective plate of home appliances, etc.

The visible light transmittance of the laminate 1 is, for example, 50% or more. The visible light transmittance is measured in accordance with Japanese Industrial Standards JIS R3106:1998 and is calculated from the formula for a case where standard illuminant D65 is used. When the visible light transmittance of the laminate 1 is 50% or more, favorable see-through will be achieved. The visible light transmittance of the laminate 1 is preferably 60% or more, more preferably 70% or more. Further, the visible light transmittance of the laminate 1 is preferably 90% or less.

The glass plate 11 is produced for example by float process or fusion process. The glass plate 11 may be constituted by soda lime glass, alkali-free borosilicate glass, borosilicate glass, high silica glass or oxide glass composed of silicon oxide as the main component.

The principal surface of the glass plate 11 is for example rectangular. A rectangle includes one of which a pair of two sides and the other pair of two sides have different lengths, and one of which the four sides have the same length. Further, a rectangle includes one of which the four corners are rounded. The length of the shortest side is for example from 100 mm to 1,000 mm, preferably from 200 mm to 600 mm. The length of the longest side is for example from 300 mm to 2,000 mm, preferably from 300 mm to 1,200 mm.

The thickness of the glass plate 11 is for example 0.1 mm or more, preferably 1.8 mm or more. The thickness of the glass plate 11 is for example 10 mm or less, preferably 5.0 mm or less, more preferably 4.0 mm or less, further preferably 3.0 mm or less.

The average coefficient of linear expansion α1 of the glass plate 11 is for example 120×10⁻⁷/°C or less, preferably 100×10⁻⁷/°C or less, more preferably 90×10⁻⁷/°C or less. The average coefficient of linear expansion α1 may, for example, be 30×10⁻⁷/°C or more, may be 50×10⁻⁷/°C or more, and may be 70×10⁻⁷/°C or more.

In this specification, the average coefficient of linear expansion means an average coefficient of linear expansion at from -40°C to 120°C. The average coefficient of linear expansion is measured in accordance with Japanese Industrial Standards JIS R3102:1995 by a differential thermal dilatometer.

Whereas the resin plate 12 is formed of a polyethylene terephthalate (PET) resin, a polycarbonate (PC) resin, an acrylic resin, or the like. The principal surface of the resin plate 12 may have the same size as or may have a different size from the principal surface of the glass plate 11, however, they are the same in this embodiment. The principal surface of the resin plate 12 is rectangular, in the same manner as the principal surface of the glass plate 11.

The thickness of the resin plate 12 is for example 0.1 mm or more, preferably 2.0 mm or more. The thickness of the resin plate 12 is for example 15 mm or less, preferably 10 mm or less, more preferably 6.0 mm or less.

The average coefficient of linear expansion α2 of the resin plate 12 is for example 100×10⁻⁷/°C or more, preferably 300×10⁻⁷/°C or more, more preferably 500×10⁻⁷/°C or more. The average coefficient of linear expansion α2 may, for example, be 2,000×10-⁷/°C or less, may be 1,200×10⁻⁷/°C or less, and may be 1,000×10⁻⁷/°C or less.

The average coefficient of linear expansion α2 of the resin plate 12 is 5 times or more the average coefficient of linear expansion α1 of the glass plate 11. α2 is preferably 7 times or more α1. Further, α2 is preferably 20 times or less α1.

The layered resin film 20 bonds the glass plate 11 and the resin plate 12. The layered resin film 20 has a stress relaxation layer 21 formed of a cured product of a photocurable resin or a thermosetting resin, and an adhesive layer 22 formed of a thermoplastic resin. When the layered resin film 20 is sandwiched between the glass plate 11 and the resin plate 12, the layered resin film 20 will not flow out, thus leading to good workability.

The stress relaxation layer 21 relaxes a stress resulting from a difference in the coefficient of linear expansion between the glass plate 11 and the resin plate 12. The glass transition temperature Tg of the stress relaxation layer 21 is 0°C or less. The glass transition temperature Tg is a temperature in a process in which the resin temperature decreases, at which the resin undergoes a transition from a soft rubbery state to a rigid glassy state. When the resin temperature is higher than the glass transition temperature Tg, the resin is in a soft rubbery state. The glass transition temperature Tg of the stress relaxation layer 21 is determined as a temperature at which the loss tangent tanδ becomes maximum, measured by reading the elastic shear modulus and tanδ at each temperature by a viscoelasticity measuring apparatus.

In the laminate 1 production process, the temperature of the stress relaxation layer 21 usually falls within a range of from room temperature (25°C) to 120°C. Thus, in the laminate 1 production process, the stress relaxation layer 21 is in a soft rubbery state, and undergoes shear deformation as absorbing a stress resulting from a difference in the coefficient of linear expansion between the glass plate 11 and the resin plate 12. Thus, in the laminate 1 production process, warpage and peeling can be suppressed.

Further, after production of the laminate 1 also, when the temperature of the stress relaxation layer 21 is at least higher than 0°C, the stress relaxation layer 21 is still in a soft rubbery state, and undergoes shear deformation as absorbing a stress resulting from a difference in the coefficient of linear expansion between the glass plate 11 and the resin plate 12. Thus, after production of the laminate 1 also, warpage and peeling of the laminate 1 can be suppressed.

The glass transition temperature Tg of the stress relaxation layer 21 is preferably - 10°C or less, more preferably -20°C or less. In a case where Tg is -10°C or less, when the temperature of the stress relaxation layer 21 is at least higher than -10°C after production of the laminate 1, the stress relaxation layer 21 is still in a soft rubbery state, and undergoes shear deformation as absorbing a stress resulting from a difference in the coefficient of linear expansion between the glass plate 11 and the resin plate 12. In a case where Tg is -20°C or less, when the temperature of the stress relaxation layer 21 is at least higher than -20°C after production of the laminate 1, the stress relaxation layer 21 is still in a soft rubbery state, and undergoes shear deformation as absorbing a stress resulting from a difference in the coefficient of linear expansion between the glass plate 11 and the resin plate 12. The glass transition temperature Tg of the stress relaxation layer 21 is preferably -60°C or more.

The elastic shear modulus G1' at 25°C of the stress relaxation layer 21 is, for example, 1/30 or less the elastic shear modulus G2' at 25°C of the adhesive layer 22. The elastic shear modulus G1' at 25°C of the stress relaxation layer 21 is preferably 1/50 or less the elastic shear modulus G2' at 25°C of the adhesive layer 22. In a case where G1' is 1/50 or less G2' at room temperature (25°C), the stress relaxation layer 21 is sufficiently flexible, and when the temperature of the laminate 1 changes from room temperature, warpage and peeling can be suppressed. At 25°C, G1' is more preferably 1/100 or less, further preferably 1/300 or less, particularly preferably 1/500 or less G2'. Further, at 25°C, G1' is preferably 1/1,000 or more G2'. The elastic shear modulus G1' is measured at a frequency of 1 Hz.

The elastic shear modulus G1' at 25°C of the stress relaxation layer 21 is preferably 1 MPa or less. In a case where G1' is 1 MPa or less at room temperature (25°C), the stress relaxation layer 21 is sufficiently flexible, and when the temperature of the laminate 1 changes from room temperature, warpage and peeling can be suppressed. Further, at 25°C, G1' is more preferably 0.8 MPa or less, further preferably 0.3 MPa or less, particularly preferably 0.1 MPa or less. Further, at 25°C, G1' is preferably 10 kPa or more, more preferably 50 kPa or more.

The elastic shear modulus G2' at 25°C of the adhesive layer 22 is preferably 50 MPa or less. When G2' is 50 MPa or less at room temperature (25°C), the adhesive layer 22 is sufficiently flexible, and when the temperature of the laminate 1 changes from room temperature, warpage and peeling can be suppressed. Further, at 25°C, G2' is more preferably 30 MPa or less. Further, at 25°C, G2' is preferably 800 kPa or more, more preferably 1.0 MPa or more, further preferably 1.5 MPa or more. The elastic shear modulus G2' is measured at a frequency of 1 Hz.

The elastic shear modulus G0' at 25°C of the layered resin film 20 is preferably 1.0 MPa or less. In a case where G0' is 1.0 MPa or less at room temperature (25°C), the layered resin film 20 is sufficiently flexible, and when the temperature of the laminate 1 changes from room temperature, warpage and peeling can be suppressed. At 25°C, G0' is more preferably 0.5 MPa or less, further preferably 0.3 MPa or less, particularly preferably 0.1 MPa or less. Further, at 25°C, G0' is preferably 20 kPa or more. The elastic shear modulus G0' is measured at a frequency of 1 Hz.

The thickness T1 of the stress relaxation layer 21 is preferably 50 µm or more. When the thickness T1 is 50 µm or more, the stress relaxation layer 21 can efficiently absorb a stress resulting from a difference in the coefficient of linear expansion. The thickness T1 is more preferably 100 µm or more, further preferably 200 µm or more. The thickness T1 of the stress relaxation layer 21 is preferably 1,000 µm or less. The thickness T1 may be 1,000 µm or less. The thickness T1 is more preferably 800 µm or less, further preferably 500 µm or less, particularly preferably less than 400 µm.

The thickness T2 of the adhesive layer 22 is preferably 50 µm or more. When the thickness T2 is 50 µm or more, in preparation of the laminate 1, bubbles which may cause bonding failure will less likely to remain at interfaces of the adhesive layer with the glass plate 11 and the resin plate 12. The thickness T2 is more preferably 100 µm or more. The thickness T2 of the adhesive layer 22 is preferably 1,000 µm or less. When the thickness T2 is 1,000 µm or less, it is not necessary to overlay two or more adhesive layers 22, and remaining of bubbles at the interface between the adhesive layers 22 will not occur. The thickness T2 is more preferably 500 µm or less.

The thickness T1 of the stress relaxation layer 21 is preferably 0.1 times or more the thickness T2 of the adhesive layer 22. When T1 is 0.1 times or more T2, the stress relaxation layer 21 is likely to undergo shear deformation as absorbing a stress resulting from a difference in the coefficient of linear expansion between the glass plate 11 and the resin plate 12. T1 is more preferably 0.2 times or more T2. The thickness T1 of the stress relaxation layer 21 is preferably 5.0 times or less the thickness T2 of the adhesive layer 22. When T1 is 5.0 times or less T2, rigidity of the laminate 1 can be secured. T1 is more preferably 1.0 time or less T2.

The stress relaxation layer 21 and the adhesive layer 22 are adjacent to each other. The adhesion F1 at the interface between the stress relaxation layer 21 and the adhesive layer 22 is preferably 3 N/25 mm or more. When F1 is 3 N/25 mm or more, peeling at the interface between the stress relaxation layer 21 and the adhesive layer 22 can be suppressed. F1 is more preferably 3.5 N/25 mm or more, further preferably 4 N/25 mm or more. F1 is preferably 15 N/25 mm or less. The adhesion F1 is measured in accordance with JIS Z0237:2009.

The stress relaxation layer 21 preferably contains a pressure-sensitive adhesive having tack property at room temperature (25°C), such as an Optical Clear Adhesive (OCA). The Optical Clear Adhesive may be used in a sheet-form or may be one having an liquid adhesive Optical Clear Resin (OCR) cured. OCR is applied, for example, to the adhesive layer 22, and then cured e.g. by irradiation with ultraviolet rays or by heating. The Optical Clear Adhesive may be used for optical application such as bonding of lenses, and can maintain high transparency without reducing the visible light transmittance.

The stress relaxation layer 21 has, as described above, an elastic shear modulus G1' at 25°C of preferably 1.0 MPa or less, whereby if a difference in dimensions between the glass plate 11 and the resin plate 12 occurs due to a difference in the coefficient of linear expansion, by an environmental temperature change, a distortion stress applied to the layered resin film 20 can be reduced. As a result, deformation of the laminate 1 by warpage, and peeling at the interface between layers constituting the laminate 1, can effectively be suppressed. The Optical Clear Adhesive is silicone-based or acrylic-based. A silicone-based Optical Clear Adhesive can make the glass transition temperature Tg of the stress relaxation layer 21 to be -20°C or less.

On the other hand, the adhesive layer 22 contains a thermoplastic resin. The thermoplastic resin does not have tack property at room temperature (25°C), like a pressure-sensitive adhesive. The thermoplastic resin has low moisture absorption as compared with a pressure-sensitive adhesive and has high adhesion to the resin plate 12. Thus, bubbles by outgassing which occurs when the resin plate 12 is heated can be suppressed. Thus, by using the thermoplastic resin, the laminate 1 can be produced by a process of heating while pressurizing a laminated body using an autoclave, like a laminated glass. Specifically, first, a layered resin film 20 containing the stress relaxation layer 21 and the adhesive layer 22 is prepared. A sheet-form transparent pressure-sensitive adhesive and the adhesive layer 22 may be laminated by laminating process, or OCR may be applied to the adhesive layer 22 and is cured e.g. by irradiation with ultraviolet rays or by heating. Then, the glass plate 11 and the resin plate 12 are overlaid with the layered resin film 20 being sandwiched, to prepare a laminated body. The laminated body is placed in a vacuum bag, and in a state where the vacuum bag is evacuated of air, the vacuum bag is baked in the air. Then, the laminated body is taken out from the vacuum bag and heated while pressurized in an autoclave. As a result, the glass plate 11 and the resin plate 12 are integrated via the layered resin film 20 to obtain the laminate 1.

The adhesive layer 22 is laminated for example on both sides of the stress relaxation layer 21 and forms an outermost layer of the layered resin film 20. One adhesive layer 22 is adjacent to the glass plate 11, and the other adhesive layer 22 is adjacent to the resin plate 12. The adhesive layer 22 has high adhesion as compared with the stress relaxation layer 21 and can suppress peeling between the glass plate 11 and the resin plate 12. The adhesive layers 22 laminated on both sides of the stress relaxation layer 21 may properly be selected depending upon the application, and they may be formed of the same material or different materials.

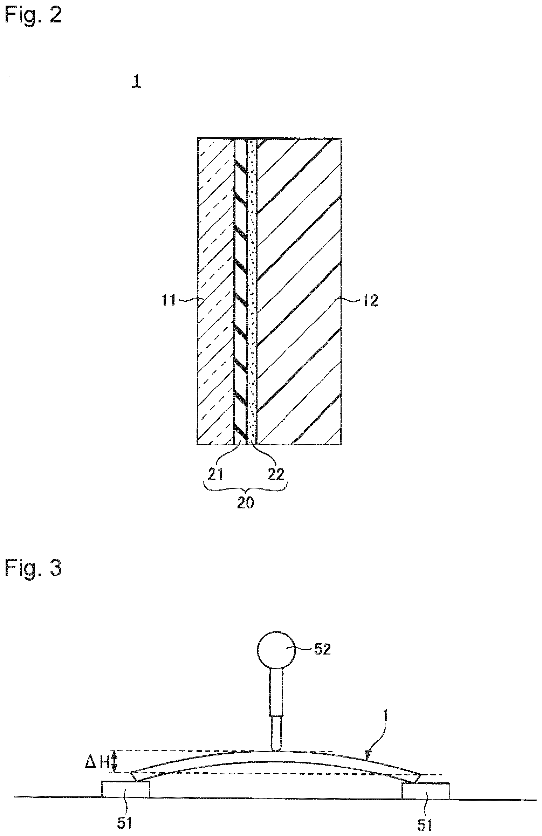

The adhesive layer 22 may be laminated, as shown in Fig. 2, on one side of the stress relaxation layer 21 and forms an outermost layer of the layered resin film 20. In such a case, the adhesive layer 22 is disposed preferably between the stress relaxation layer 21 and the resin plate 12, and is adjacent to the resin plate 12. And, the stress relaxation layer 21 is adjacent to the glass plate 11.

The adhesion between the stress relaxation layer 21 and the glass plate 11 is high as compared with the adhesion between the stress relaxation layer 21 and the resin plate 12. Thus, in a case where the stress relaxation layer 21 and the glass plate 11 are adjacent to each other, peeling in a temperature cycle test can be suppressed as compared with a case where the stress relaxation layer 21 and the resin plate 12 are adjacent to each other.

The adhesion F2 at the interface between the resin plate 12 and the adhesive layer 22 adjacent to the resin plate 12, is for example 20 N/25 mm or more. When F2 is 20 N/25 mm or more, peeling at the interface between the resin plate 12 and the adhesive layer 22 adjacent to the resin plate 12 can be suppressed. F2 is preferably 25 N/25 mm or more. F2 is preferably 70 N/25 mm or less. The adhesion F2 is measured in accordance with JIS Z0237:2009.

The adhesive layer 22 contains, as the thermoplastic resin, for example, an ethylene/vinyl acetate (EVA) resin, a cycloolefin polymer (COP) resin, a polyvinyl butyral (PVB) resin or a thermoplastic polyurethane (TPU) resin. An EVA resin and a COP resin have low water absorption and their change of appearance after lamination is small, as compared with a PVB resin and a TPU resin. An EVA resin, a COP resin and a TPU resin have a low elastic modulus in tension at 100°C and have good bubble release properties, as compared with a PVB resin. Further, it is preferred that the adhesive layer 22 does not contain polyvinyl acetal having high water absorption.

The adhesive layer 22 preferably contains a COP resin. A COP resin has low water absorption, and its change of appearance after lamination is smaller, as compared with a PVB resin. Further, a COP resin has good adhesion as compared with a PVB resin.

A COP resin may, for example, be a thermoplastic resin containing a block copolymer hydride having some of unsaturated bonds of a block copolymer hydrogenated. 90% or more of all unsaturated bonds contained in the block copolymer may be hydrogenated.

The block copolymer contains a first component and a second component. The first component is a polymer block containing as the main component repeating units derived from an aromatic vinyl compound. The second component is a polymer block containing as the main component repeating units derived from a chain conjugated diene compound. The ratio (WA:WB) of the weight WA of the first component to the weight WB of the second component is from 30:70 to 60:40.

The elastic modulus in tension at 100°C of the COP resin is determined e.g. by the mixing ratio of the first component and the second component in the block copolymer. The lower the ratio of the second component is, the lower the softening point of the COP resin tends to be, and the lower the elastic modulus in tension at 100°C of the COP resin tends to be. WA:WB is preferably 35:65 to 55:45, more preferably 40:60 to 50:50.

The COP resin may contain, in addition to the block copolymer hydride, an additive. The additive is a conjugated polymer with good compatibility with the block copolymer hydride. By such an additive, the elastic modulus in tension at 100°C can be controlled.

The conjugated polymer with good compatibility may, for example, be a block copolymer hydride which is a precursor of the block copolymer hydride; an olefin polymer such as polyethylene, polypropylene, an ethylene/propylene copolymer or a propylene/ethylene/1-butene copolymer; an isobutylene polymer such as polyisobutylene or an isobutylene/isoprene copolymer hydride; or a petroleum resin or a hydride thereof, such as a 1,3-pentadiene petroleum resin, a cyclopentadiene petroleum resin or a styrene/indene petroleum resin.

The adhesive layer 22 may contain a thermoplastic EVA resin. The thermoplastic EVA resin contains no organic peroxide nor silane coupling agent and has no heat cross-linking property. That is, the thermoplastic EVA resin has contents of an organic peroxide and a silane coupling agent of 0 mass%. If an organic peroxide or a silane coupling agent is mixed with the EVA resin, heat cross-linking property may be imparted to make the resin a curable resin. Further, if the EVA resin contains an organic peroxide or a silane coupling agent, the EVA resin is crosslinked and cured by heat-pressurization treatment in an autoclave, and the elastic modulus in tension of the EVA resin increases as the curing by crosslinking progresses. On the other hand, even when the COP resin contains an organic peroxide or a silane coupling agent, the COP resin will not become a curable resin.

The EVA resin contains, for example, per 100 parts by weight of the EVA resin having a vinyl acetate content of from 15 wt% to 50 wt% and having a melt mass flow rate measured in accordance with JIS K6924-1 of from 0.1 g/10 min to 100 g/10 min, from 0.5 to 10 parts by weight of a low molecular weight compound having a refractive index of from 1.480 to 1.600 and having solubility parameter measured by Fedors method of from 8.5 to 10.1. The EVA resin has a vinyl acetate content of from 15 wt% to 50 wt%, preferably within a range of from 20 wt% to 35 wt%, whereby low temperature adhesion to an adherend and transparency will be more excellent. When the vinyl acetate content is 15 wt% or more, the obtainable adhesive resin composition and its formed product will be excellent in low temperature adhesion. On the other hand, when the vinyl acetate content is 50 wt% or less, adhesion at ordinary temperature tends to be weak, and the softening temperature tends to be high, whereby the obtainable resin composition and its formed product will be excellent in blocking resistance. The vinyl acetate content of the EVA resin may be obtained, for example, by the vinyl acetate content measured in accordance with JIS K6924-1. The melt mass flow rate (MFR) of the EVA resin is preferably within a range of from 0.01 g/10 min to 100 g/10 min as measured in accordance with JIS K6924-1 at a temperature of 190°C under a load of 21.18 N, and in order to achieve more excellent extrusion property, more preferably from 0.5 g/10 min to 40 g/10 min. When the melt mass flow rate is 0.01 g/10 min or more, extrusion load and the resin pressure at the time of forming tend to be low, thus leading to excellent processability, and when it is 100 g/10 min or less, draw down at the time of melting tends to be small, thus leading to excellent handling efficiency and shaping property at the time of compounding.

The low molecular weight compound is incorporated mainly for the purpose of improving transparency. The low molecular weight compound is a compound having a molecular weight of several thousands or less, having a specific refractive index and specific solubility parameter, specifically, may, for example, be a phthalate, a trimellitate, a phosphate, a benzoate or a sebacate, such as dibutyl phthalate, tris-2-ethylhexyl trimellitate, tricresyl phosphate, triphenyl phosphate, diphenylmethane or benzyl benzoate. By mixing such a low molecular weight compound having a specific refractive index and specific solubility parameter with the EVA resin, the crystallinity of the EVA resin will be lowered, and the transparency will improve.

The EVA resin may further contain a hydrogenated hydrocarbon resin. The hydrogenated hydrocarbon resin is incorporated for the purpose of improving transparency and tack property. Specifically, it may be an aliphatic hydrocarbon resin, an alicyclic hydrocarbon resin or an aromatic hydrocarbon resin. The aliphatic hydrocarbon resin may, for example, be a polymer composed mainly of a C4 to C5 mono- or diolefin such as 1-butene, butadiene, isobutylene or 1,3-pentadiene, the alicyclic hydrocarbon resin may be a resin having diene components in spent C4 to C5 fractions cyclodimerized and then polymerized or a resin having a cyclic monomer such as cyclopentadiene polymerized, and the aromatic hydrocarbon resin may, for example, be a resin containing as a component a C2 vinyl aromatic hydrocarbon resin such as vinyl toluene, indene or α- methyltoluene. Among such hydrocarbon resins, in view of compatibility with the ethylene/vinyl acetate copolymer and the hue, a partially hydrogenated petroleum hydrocarbon resin having a low softening temperature is more preferred. The amount of the hydrogenated hydrocarbon resin incorporated to the EVA resin is, for example, within a range of from 5 parts by weight to 30 parts by weight. The amount of the hydrogenated hydrocarbon resin incorporated to the EVA resin is more preferably within a range of from 10 parts by weight to 20 parts by weight, whereby a resin composition that gives a formed product having more excellent handling efficiency at ordinary temperature, in addition to transparency and tack property, will be obtained.

The elastic modulus in tension E' at 100°C of the adhesive layer 22 is, for example, less than 5.0×10⁵ Pa. When the elastic modulus in tension E' is less than 5_{.}0×10⁵ Pa, the resin of the adhesive layer 22 is flexible even at a low laminating temperature of about 100°C, and thus bubble release properties will be good. Thus, a reduction in the laminating temperature and improvement of bubble release properties of the adhesive layer 22 can be realized.

The elastic modulus in tension E' at 100°C of the adhesive layer 22 is preferably 4.0×10⁵ Pa or less, more preferably 2.0×10⁵ Pa or less. Further, the elastic modulus in tension E' at 100°C of the adhesive layer 22 is preferably 1_{.}0×10⁴ Pa or more.

### EXAMPLES

Now, experiment data will be described below.

### [Stress relaxation layer and adhesive layer]

Physical properties of the stress relaxation layer used in the experiment are shown in Table 1.

**[Table 1]**

| Stress relaxation layer | G1' at 25°C [Pa] | Tg1 [°C] |
|---|---|---|
| A1 | 100×10³ | 0 |
| A2 | 15×10³ | -20 or less |

In Table 1, "G1'" is the elastic shear modulus at 25°C of the stress relaxation layer, and "Tg1" is the glass transition temperature of the stress relaxation layer. Further, in Table 1, "A1" is an acrylic-based OCA (model: G6.0, thickness: 0.2 mm) manufactured by Mitsubishi Chemical Corporation, and "A2" is a silicone-based OCA (model: α gel, thickness: 0.2 mm) manufactured by Taica Corporation.

Physical properties of the adhesive layer used in the experiment are shown in Table 2.

**[Table 2]**

| Adhesive layer | G2' at 25°C [Pa] | Tg2 [°C] |
|---|---|---|
| B1 | 10×10⁶ | 92 |
| B2 | 5.2×10⁶ | 88 |

In Table 2, "G2'" is the elastic shear modulus at 25°C of the adhesive layer, and "Tg2" is the glass transition temperature of the adhesive layer. Further, in Table 2, "B1" is a COP resin film (model: LS-XT, thickness: 0.5 mm) manufactured by Zeon Corporation, and "B2" is an EVA resin film (model: G7050, thickness: 0.4 mm) manufactured by Tosoh Corporation.

The elastic shear moduli G1' and G2' shown in Tables 1 and 2 were measured by torsional shear method using a viscoelasticity measuring apparatus (manufactured by Anton Paar, apparatus name: "MCR300"). The measurement conditions were as follows. The test start temperature: -20°C, the test end temperature: 100°C, the temperature-increasing rate: 3°C/min, the measurement frequency: 1 Hz, the dynamic shearing strain: 0.1%.

Further, as shown in Tables 1 and 2, the glass transition temperature was obtained from the above measurement results by the viscoelasticity measuring apparatus. Specifically, the elastic shear modulus and the loss tangent tanδ at each temperature were read, and the temperature at which tanδ became maximum was taken as the glass transition temperature.

### [Laminate]

The laminate structure of the laminate prepared in each of Ex. 1 to 7, and the results of evaluation of the laminate are shown in Tables 3 and 4. Ex. 1 and 2 shown in Table 3 are Comparative Examples, and Ex. 3 to 7 shown in Tables 3 and 4 are Examples of the present invention.

**[Table 3]**

| | Lamination structure | T1 [mm] | T2 [mm] | T0 [mm] | T1/T2 | Warpage at 25°C [mm] | Warpage at 80°C [mm] | Warpage at -20°C [mm] |
|---|---|---|---|---|---|---|---|---|
| Ex. 1 | PC/A1×2/Glass | 0.4 | - | 0.4 | - | 0 | 0.8 | -1.8 |
| Ex. 2 | PC/B1×2/Glass | - | 1.0 | 1.0 | - | 4.2 | 10.2 | - |
| Ex. 3 | PC/A1/B1/Glass | 0.2 | 0.5 | 0.7 | 0.4 | 0 | 0.8 | -2.4 |
| Ex. 4 | PC/B1/A1/Glass | | | | | | 0.9 | -2.4 |
| Ex. 5 | PC/B1/A1/B1/Glass | 0.2 | 0.5 | 1.2 | 0.4 | | 0.8 | -2.4 |
| Ex. 6 | PC/B1/A2/B1/Glass | 0.2 | 0.5 | 1.2 | 0.4 | | 0.5 | -0.5 |
| Ex. 7 | PC/B2/A1/B2/Glass | 0.2 | 0.4 | 1.0 | 0.5 | | 0.9 | -2.3 |

**[Table 4]**

| | Lamination structure | Adhesion | | G0' [Pa] | Tg1 [°C] | Warpage at 25°C | HC resistance |
|---|---|---|---|---|---|---|---|
| | | F1 [N/25 mm] | F2 [N/25 mm] | | | | |
| Ex. 1 | PC/A1 ×2/Glass | - | 15 | 100×10³ | 0 | ○ | × |
| Ex. 2 | PC/B1 ×2/Glass | - | 25 | 10x10⁶ | - | × | ○ |
| Ex. 3 | PC/A1/B1/Glass | 7.2 | 15 | 280×10³ | 0 | ○ | × |
| Ex. 4 | PC/B1/A1/Glass | | 25 | | | | ○ |
| Ex. 5 | PC/B1/A1/B1/Glass | 7.2 | | 500×10³ | | | |
| Ex. 6 | PC/B1/A2/B1/Glass | 4.3 | | 55×10³ | -20 or less | | |
| Ex. 7 | PC/B2/A1/B2/Glass | 5.9 | More than 50 | 25×10³ | 0 | | |

In Tables 3 and 4, "PC" is a polycarbonate (PC) resin plate having an average coefficient of linear expansion α2 of 650×10⁻⁷/°C and a thickness of 5 mm, "glass" is a glass plate having an average coefficient of linear expansion α1 of 85×10⁻⁷/°C and a thickness of 0.5 mm, "A1" and "A2" are ones as shown in Table 1, and "B1" and "B2" are ones as shown in Table 2. "PC", "glass", "A1", "A2", "B1" and "B2" have a 300 mm square principal surface.

In Table 3, "T1" is the thickness of the stress relaxation layer, "T2" is the thickness of the adhesive layer, and "T0" is the total thickness of the layered resin film. As shown in Table 3, in Ex. 1, as the stress relaxation layer, two sheets of acrylic OCA each having a thickness of 0.2 mm overlaid were used. Further, in Ex. 2, as the adhesive layer, two COP resin films each having a thickness of 0.5 mm overlaid were used.

In Ex. 1 to 7, first, a laminated body with the lamination structure shown in Table 3 or 4 was prepared. Then, the laminated body was placed in a vacuum bag, and in a state where the vacuum bag was evacuated of air, the vacuum bag was baked in the air. The baking temperature was 85°C. Then, the laminated body was taken out from the vacuum bag and heated while pressurized in an autoclave. The heating temperature was 100°C, the heating time was 90 minutes, and the pressure applied was 1 MPA. As a result, a laminate having a desired lamination structure was obtained.

The method of measuring warpage shown in Table 3 was as follows. First, as shown in Fig. 3, a metal piece 51 of 20 mm × 20 mm × 10 mm in thickness was disposed on four corners of the laminate 1, on the four metal pieces 51, the laminate 1 was placed, and the laminate 1 was disposed in a constant temperature chamber. The laminate 1 was disposed so that the glass plate faced upward and the polycarbonate resin plate faced downward. The temperature in the constant temperature chamber was increased and decreased, and the warpage ΔH of the laminate 1 was measured at -20°C, at 25°C and at 80°C by a microgauge 52. In Table 3, positive warpage means that the laminate was warped convex downward, and negative warpage means that the laminate was warped convex upward.

As evident from Table 3, in Ex. 3 to 7, since the PC resin plate and the glass plate were bonded by using the layered resin film having the stress relaxation layer and the adhesive layer laminated, warpage at 25°C was small, and warpage in the laminate production process could be suppressed. Further, in Ex. 3 to 7, warpage at 80°C and at -20°C was also small, and warpage could be suppressed even after production of the laminate.

On the other hand, in Ex. 1, since the PC resin plate and the glass plate were bonded using only the stress relaxation layer, although warpage at 25°C was small, peeling was confirmed at the periphery of the laminate during cooling from 25°C to - 20°C.

Further, in Ex. 2, since the PC resin plate and the glass plate were bonded using only the adhesive layer, warpage at 25°C was significant, and the glass plate was broken at about 0°C during cooling from 25°C to -20°C.

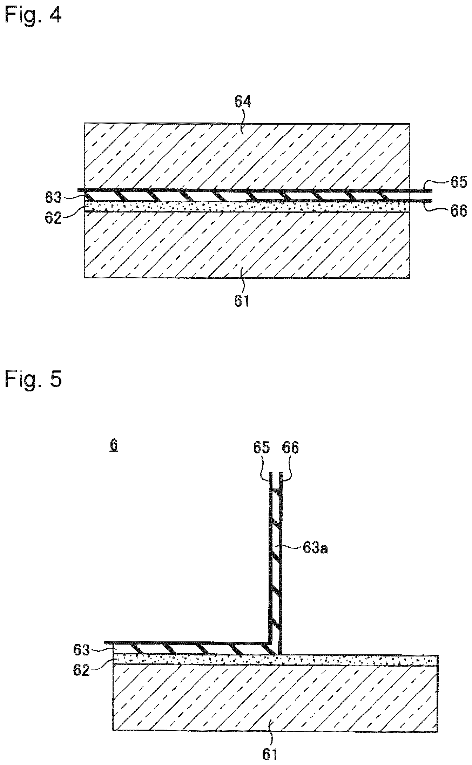

In Table 4, the adhesion F1 is the adhesion at the interface between the stress relaxation layer and the adhesive layer. A method of preparing a test specimen 6 used for measurement of the adhesion F1 was as follows. That is, first, as shown in Fig. 4, a laminated body having the glass plate 61, the adhesive layer 62, the stress relaxation layer 63 and the glass plate 64 overlaid in this order was prepared and put in a vacuum bag.

Before preparation of the laminated body, a PET resin film 65 having a thickness of 25 µm was bonded to the entire surface of the stress relaxation layer 63 facing the glass plate 64, so as to prevent bonding of the stress relaxation layer 63 and the glass plate 64. Further, a PET resin film 66 having a thickness of 25 µm was bonded to a half surface of the stress relaxation layer 63 facing the adhesive layer 62.

Then, the vacuum bag was baked in the air in a state where the vacuum bag was evacuated of air. The baking temperature 85°C. Then, the laminated body was taken out from the vacuum bag and heated while pressurized in an autoclave. The heating temperature was 100°C, the heating time was 90 minutes, and the pressure applied was 1 MPa. Then, the glass plate 64 was removed to obtain a test specimen shown in Fig. 5.

The adhesion F1 was measured by so-called 90° peel test in accordance with JIS Z0237:2009. Specifically, as shown in Fig. 5, while a portion 63a of the stress relaxation layer 63 peeled from the adhesive layer 62 was kept vertical to the glass plate 61, the stress relaxation layer 63 was peeled from the adhesive layer 62, and the force required for peeling was obtained as the adhesion F1. The peeling rate was set at 5.0 mm/sec. The width of the test specimen 6 was 25 mm.

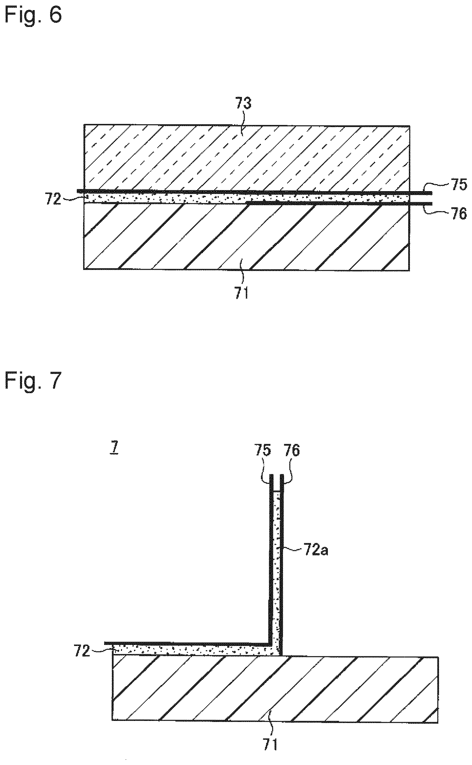

In Table 4, the adhesion F2 is the adhesion at the interface between the PC resin plate and the resin layer (the adhesive layer or the stress relaxation layer) adjacent to the PC resin plate. A method of preparing a test specimen 7 used for measurement of the adhesion F2 was as follows. That is, first, as shown in Fig. 6, a laminated body having a PC resin plate 71, a resin layer 72 and a glass plate 73 laminated in this order was prepared and put in a vacuum bag.

Before preparation of the laminated body, a PET resin film 75 having a thickness of 25 µm was bonded to the entire surface of the resin layer 72 facing the glass plate 73, so as to prevent bonding of the resin layer 72 and the glass plate 73. Further, a PET resin film 76 having a thickness of 25 µm was bonded to a half surface of the resin layer 72 facing the PC resin plate 71.

Then, the vacuum bag was baked in the air in a state where the vacuum bag was evacuated of air. The baking temperature 85°C. Then, the laminated body was taken out from the vacuum bag and heated while pressurized in an autoclave. The heating temperature was 100°C, the heating time was 90 minutes, and the pressure applied was 1 MPa. Then, the glass plate 73 was removed to obtain a test specimen 7 shown in Fig. 7.

The adhesion F2 was measured by so-called 90° peel test in accordance with JIS Z0237:2009. Specifically, as shown in Fig. 7, while a portion 72a of the resin layer 72 peeled from the PC resin plate 71 was kept vertical to the PC resin plate 71, the resin layer 72 was peeled from the PC resin plate 71, and the force required for peeling was obtained as the adhesion F2. The peeling rate was set at 5.0 mm/sec. The width of the test specimen 7 was 25 mm.

In Table 4, "G0'" is the elastic shear modulus at 25°C of e.g. the layered resin film to be laminated between the PC resin plate and the glass plate, and was measured in the same manner as the elastic shear moduli G1' and G2' shown in Tables 1 and 2. "Tg1" is the glass transition temperature of the stress relaxation layer.

In Table 4, "warpage" was measured by the measurement method shown in Fig. 3. The evaluation result of warpage of "O" means that ΔH is 0 mm or more and 2 mm or less, and "×" means that ΔH is less than 10 mm or more than 2.1 mm.

In Table 4, "HC resistance" was evaluated by whether peeling occurred after a heat cycle test of the laminate. In the heat cycle test, a cycle of keeping the temperature of the laminate at -20°C for 1 hour, increasing the temperature from -20°C to 80°C in one hour, keeping the temperature at 80°C for 1 hour, and decreasing the temperature from 80°C to -20°C in 1 hour, was repeated 20 times. The evaluation result of HC resistance of "O" means that no peeling was confirmed after the heat cycle test, and "×" means that peeling was confirmed after the heat cycle test.

As evident from Table 4, in Ex. 3 to 7, since the PC resin plate and the glass plate were bonded by the layered resin film having the stress relaxation layer and the adhesive layer laminated, warpage at 25°C was small, and warpage in the laminate production process could be suppressed. Further, in Ex. 4 to 7, HC resistance was also excellent, and warpage could be suppressed even after production of the laminate.

On the other hand, in Ex. 1, since the PC resin plate and the glass plate were bonded using only the stress relaxation layer, although warpage was small, the adhesion F2 between the stress relaxation layer and PC resin plate was low, and HC resistance was poor.

Further, in Ex. 2, since the PC resin plate and the glass plate were bonded using only the adhesive layer, although the adhesion F2 was high and HC resistance was good, warpage was significant.

The layered resin film and the laminate according to the present disclosure have been described above. However, it should be understood that the present invention is by no means restricted to the above specific embodiments. Various changes, modification, replacement, addition, deletion and combination are possible without departing from the intension and the scope of the present invention. They of course belong to the technical range of the present disclosure.

The entire disclosure of Japanese Patent Application No. 2020-219291 filed on December 28, 2020 including specification, claims, drawings and summary is incorporated herein by reference in its entirety.

### REFERENCE SYMBOLS

- 1:: laminate
- 11:: first plate-like body
- 12:: second plate-like body
- 20:: layered resin film
- 21:: stress relaxation layer
- 22:: adhesive layer

## Claims

1. A layered resin film comprising a stress relaxation layer formed of a cured product of a photocurable resin or a thermosetting resin, and
an adhesive layer formed of a thermoplastic resin,
wherein the adhesive layer is laminated on one side or on both sides of the stress relaxation layer and forms an outermost layer, and
the stress relaxation layer has a glass transition temperature of 0°C or less.

2. The layered resin film according to Claim 1, wherein the elastic shear modulus at a temperature of 25°C at a frequency of 1 Hz of the stress relaxation layer is 1/50 or less the elastic shear modulus at a temperature of 25°C at a frequency of 1 Hz of the adhesive layer.

3. The layered resin film according to Claim 1 or 2, which has an elastic shear modulus at a temperature of 25°C at a frequency of 1 Hz of 1.0 MPa or less.

4. The layered resin film according to any one of Claims 1 to 3, wherein the thickness of the stress relaxation layer is from 0.1 to 5.0 times the thickness of the adhesive layer.

5. The layered resin film according to any one of Claims 1 to 4, wherein the stress relaxation layer and the adhesive layer are adjacent to each other, and
the adhesion at an interface between the stress relaxation layer and the adhesive layer is 3 N/25 mm or more.

6. The layered resin film according to any one of Claims 1 to 5, wherein the adhesive layer is laminated on both sides of the stress relaxation layer.

7. The layered resin film according to any one of Claims 1 to 6, wherein the stress relaxation layer is an Optical Clear Adhesive.

8. The layered resin film according to Claim 7, wherein the Optical Clear Adhesive is silicone-based or acrylic-based.

9. A laminate comprising the layered resin film as defined in any one of Claims 1 to 8, a first plate-like body laminated on one side of the layered resin film, and a second plate-like body laminated on the other side of the layered resin film,
wherein the average coefficient of linear expansion at from -40°C to 120°C of the second plate-like body is 5 times or more the average coefficient of linear expansion at from -40°C to 120°C of the first plate-like body, and
the adhesive layer is adjacent to the second plate-like body.

10. The laminate according to Claim 9, wherein the adhesive layer is laminated on both sides of the stress relaxation layer,
one adhesive layer is adjacent to the second plate-like body, and
the other adhesive layer is adjacent to the first plate-like body.

11. The laminate according to Claim 9 or 10, wherein the adhesion at an interface between the second plate-like body and the adhesive layer adjacent to the second plate-like body, is 20 N/25 mm or more.

12. The laminate according to any one of Claims 9 to 11, wherein the first plate-like body is a glass plate, and the second plate-like body is a resin plate.

13. The laminate according to Claim 12, wherein the resin plate is an acrylic resin plate or a polycarbonate resin plate.

14. The laminate according to any one of Claims 9 to 13, which has a visible light transmittance of 50% or more.

15. The laminate according to any one of Claims 9 to 14, wherein the first plate-like body and the second plate-like body form an outermost layer.
